# EUROPEAN PATENT APPLICATION

(11) **EP 0 747 472 A2**
(43) Date of publication of application: **11.12.1996**
(21) Application number: 96201893.3
(22) Date of filing: 04.02.1993
(51) Int. Cl.: C12C 1/18, C12G 3/02, C12C 7/04

(54) **Concentrated beer flavor product**

(30) Priority: 06.02.1992 US 832132
(62) Divisional of application: 93905035.7
(71) Applicant: BIO-TECHNICAL RESOURCES, INC., Manitowoc Wisconsin 54220 (US)
(72) Inventor: Doncheck, James Allan, Manitowoc, Wisconsin 54220 (US); Morton, Bruce John, Manitowoc, Wisconsin 54220 (US); Sfat, Michael, Rudolph, Manitowoc, Wisconsin 54220 (US); Wege, Ann Christine, Manitowoc, Wisconsin 54220 (US)
(74) Representative: BROOKES & MARTIN

(57) **Abstract**

An amylolytic enzyme-reduced dried malt is disclosed having a moisture content of 3.5 to 5.5 weight percent, a soluble protein content of 6.5 to 8 weight percent and a reduced alpha amylase content. The low amylase content limits the amount of fermentable sugar produced during mashing, while the malt contains sufficient protein nitrogen to promote fermentation.

## Description

### 1. Field of the Invention:

The present invention relates to a process for the preparation of a concentrated beer flavor product.

### 2. Description of the Related Art:

U. S. 3,689,277 discloses a process for producing a malt flavor base for use in foodstuffs, particularly non-alcoholic beverages. The process involves grinding a high protein content grain seed, such as high protein barley, followed by an aqueous enzymatic treatment to extract the protein preferentially from the grain as compared with carbohydrates. The starch content of the extract is hydrolyzed by treatment with amylolytic enzyme to provide starch-free solution which is mixed with sugar and dried by heating to impart a caramel flavor.

U. S. 3,711,292 discloses producing a concentrated protein hydrolysate substantially free of starch by heating a starchy proteinaceous cereal grain with an aqueous proteolytic enzyme to produce a solution containing soluble protein hydrolysis products together with a starchy carbohydrate fraction, separating the solution from undissolved residue, and treating the separated solution with amylolytic enzyme to produce a starch-free solution. The product is useful as a flavor precursor for beer or may be incorporated in a sugary fermentation wort to produce a wort low in unfermentable carbohydrates.

U. S. 3,717,471 discloses a low carbohydrate beer produced by subjecting barley malt to aqueous extraction conditions favorable to extraction of protein while unfavorable to the extraction of carbohydrate, adding a highly fermentable sugar to the resulting extract to produce a brewers wort low in unfermentable carbohydrates, and fermenting the resulting wort.

### SUMMARY OF THE INVENTION

The present invention relates to a process for preparing a malt beverage with intensified beer flavor properties. This process employs a barley malt which is specially prepared to have high soluble protein and very low amylase levels.

Malts produced for brewing beer are carefully made to contain the enzymes, extract and nitrogen necessary to perform well in the brewhouse, ferment well and result in a fermented malt beverage that has the physical and organoleptic attributes that are familiar to and desired by the consumer. Such malts are not suited for producing an intensified beer flavor.

Other specialty malts with more intense flavor are commercially available, but these are usually produced by using higher kiln finishing temperatures which result in a predominant caramel aroma and flavor in the finished product.

Dextrine or crystal malt, for example, is made by heating high moisture green malt to a temperature range that favors amylolytic activity (60°-75°C), holding such temperature for a time to liquify and saccharify starch, then increasing the temperature to about 150°C to caramelize the resulting sugars.

The present process involves preparing a barley malt which is treated with an enzyme promoter, such as gibberellic acid shortly after steep-out, germinating the barley at a fairly low temperature with daily mixing and water addition as needed to maintain the moisture content at about 43%. After germination is complete the green malt is enclosed in a sealed container and heated to reduce amylolytic enzyme activity. After the closed heating step the malt is transferred to a kiln basket having a foraminous bottom and an open top and heated for a few hours to partially dry the malt. Then the heat is somewhat reduced to allow the malt to further dry for nearly a day. Then the heat is turned up to 85°-95°C for a few hours for a final drying.

The final product has a moisture content of 3.5-5.5% and a soluble protein content of 6.5-8%. The resulting malt is then mashed, either by itself or with a more conventional malt to produce a wort which is boiled with hops then cooled and pitched with brewers yeast and fermented. During fermentation, a toasted barley protein extract is added to further intensify the flavor of the finished product. The fermented wort is chilled to settle the yeast then filtered to produce the beer flavor concentrate which can be vacuum evaporated, freeze concentrated, freeze-dried, spray dried or blended or formulated into various types of beer, including use as a flavor additive for various types of beer.

Thus the present invention provides a process for preparing a concentrated beer flavored product comprising the steps of: germinating barley to produce a green malt; heating the green malt in a closed container at 85° to 95°C for 2 to 6 hours to reduce amylolytic enzymes; kiln drying the thus produced amylolytic enzyme deficient green malt to 3.5 to 5.5 weight percent moisture content: making a mash from the dried malt by grinding and adding brewing water, thus producing a wort and a residue from the malt; separating the wort from the residue; boiling the wort; cooling and pitching the thus produced boiled wort with yeast; and fermenting the pitched wort to produce a fermented wort.

### DESCRIPTION OF THE PREFERRED EMBODIMENTS

The process of the present invention involves making a malt that has a low content of amylase enzymes. This limits the amount of fermentable sugar produced during mashing. At the same time the malt must possess enough soluble protein to provide nitrogen for fermentation. In the present invention, such a malt is made by modifying the kilning process.

In the standard malting process, brewers malt is kilned in a series of stepwise temperature increases during the course of drying. Beginning temperatures are of the order of 140°F (60°C) for several hours and finishing is a few hours at about 175°F (79°C) some 24 hours later. High heat levels are avoided during the high moisture stage of drying as a means of minimizing heat destruction of enzymes. As the product dries the enzymes become less susceptible to destruction by heat.

In the process of the present invention, a special malt lower in amylase enzymes is made by sealing the malt in a closed container during initial heating to reduce the amylase enzymes. After the internal bed temperature has been at 70° to 89°C (i.e. heated at 85° to 95°C) for one-half to 3 hours and the container is opened, the malt is still very damp containing about 45% moisture. The malt is then put in an open topped container having a foraminous bottom and heated air is passed through the bed of grain. The bed is blown with air which has an inlet temperature of 85°C and an exit temperature of 70° to 85°C. The inlet air temperature is turned down to 55° to 65°C for 12 to 20 hours, which is not done in the art, after which the inlet air temperature is raised to 85° to 95°C for one-half to 3 hours. The outlet air is approximately the same as the inlet air temperature during this period. During this period the bed temperature rises from a range of 45° to 55°C to a range of 85° to 90°C. The moisture content of this malt (Type 1) is 3.5 to 5.5% and the soluble protein is 6.5 to 8%.

The brewing process involves grinding the malt to provide a 70 to 80% retention on a NO. 14 U.S. mesh sieve series screen. Preferably a blend of 40 to 95 wt.% Type 1 malt and 60 to 5 wt.% Type 2 malt is used.

The ground malt is mixed with 2.5 to 4 times its weight of brewing water and mashed in at 35° to 40°C for 5 to 15 minutes and then given a protein rest for 45 to 90 minutes without stirring. Stirring is then resumed and the mash is heated to 70° to 73°C and held for 15 to 30 minutes. The temperature is then raised to 75°C and the mash transferred to the lauter unit. The lauter temperature is about 72° to 77°C for both the bath and sparge water. The amount of sparge water used is about 50 to 75% of the amount of brewing water. The mash is then allowed to settle for 10 to 20 minutes and run-off begun. The wort is recycled until reasonably clear, then it is directed to the brew kettle. The collected wort is then boiled for 1 to 2 hours. To the wort is added from 0 to 8%, based on dry malt, hops mostly during early stages of the boil.

The wort is then cooled and aerated. The wort is then pitched with 2-4.3 g/litre (0.7 to 1.5 lb/bbl) brewers yeast. The wort is then fermented at 12° to 16°C for 5 to 10 days. After 2 to 4 days fermenting a protein extract (0.1 to 0.5% based on malt) preferably is added to the wort. After fermentation the fermented wort is moved to a cold room at 0° to 5°C. After filtration, the beer can be vacuum evaporated, freeze concentrated, freeze-dried, spray-dried, or can be blended or formulated into various types of beer or intense beer flavored products. The fermented wort can be diluted with water to produce a non-alcoholic malt beverage containing less than 0.5 volume percent alcohol and less than 420 Joules per litre (40 calories per 12 ounces) which closely simulates conventional beer flavor, taste and mouthfeel. The fermented wort can also be concentrated to an intense beer flavored liquid or dried to an intense flavored powder which can be added to a variety of materials to produce an economical beer flavored product.

### EXAMPLE 1

Five and one-half kilograms of barley (12% moisture, 12.5% protein) is steeped in water for 18 hours at room temperature. The water is changed two times during steep. The steep out moisture is 40 wt%.

The steeped-out barley is then placed in a container which has a perforated steel bottom and humidified air blown through the bed to maintain the temperature at 12°C. After 24 hours the barley is treated with gibberellic acid (10 ppm barley basis in 300 ml water) by mixing with the barley. The germinating barley is mixed and watered daily to maintain a moisture content of approximately 43 wt%.

After germination is complete (6 days), the green malt is covered with foil and placed in an oven at a temperature of 88°C for 6 hours.

| | Exit Air Temp.(°C) | Bed Temp.(°C) |
|---|---|---|
| After 2 hours | 87 | 70 |
| After 4 hours | 89 | 82 |
| After 6 hours | 89 | 83 |

The malt is then transferred to a kiln basket, having a screen bottom and open top, and put in a kiln with the temperature set at 88°C for 2 hours.

| | Exit Air Temp.(°C) | Bed Temp.(°C) |
|---|---|---|
| After 5 minutes | 80 | 62 |
| After 30 minutes | 75 | 56 |
| After 60 minutes | 71 | 54 |
| After 90 minutes | 69 | 51 |
| After 120 minutes | 70 | 52 |

The the kiln temperature is turned down to 60°C and held for 15 hours.

Then the kiln temperature is turned up to 88°C and held for 3 hours.

| | Exit Air Temp. (°C) | Bed Temp. (°C) |
|---|---|---|
| After 5 minute | -- | 49 |
| After 30 minutes | 85 | 84 |
| After 60 minutes | 87 | 87 |
| After 90 minutes | 87 | 88 |
| After 120 minutes | 87 | 89 |

The final moisture content is 4.5% and the soluble protein is 7.5%. The total kilning time is 26 hours. This malt is labeled Type 1.

### EXAMPLE 2

Five and one-half kilograms of barley (12% moisture, 12.5% protein) is steeped in water for 18 hours at room temperature. The water is changed two times during steep. The steep out moisture is 40 wt%.

The steeped-out barley is then placed in a container which has a perforated steel bottom and humidified air blown through the bed to maintain the temperature at 12°C. After 24 hours the barley is treated with gibberellic acid (10 ppm barley basis in 300 ml water) by mixing with the barley. The germinating barley is mixed and watered daily to maintain a moisture content of approximately 43 wt%.

After germination is complete (6 days), the green malt is placed in a kiln at 60°C and held for 16 hours.

Then the kiln temperature is turned up to 80°C and held for 4 hours. Then the kiln temperature is turned up to 86°C and held for 4 hours to complete the kilning cycle. The malt is labeled Type 2.

### Malt Analysis

### (American Society of Brewing Chemists Methods of Analysis)

| | Type 1 | Type 2 |
|---|---|---|
| Moisture, % | 5.4 | 2.6 |
| Fine Grind Extract, % dry basis | 77* | 77.8 |
| Coarse Grind Extract, % dry basis | 70* | 74.8 |
| Fine-Coarse Difference, % | 7* | 3.0 |
| Diastatic Power, °L, dry basis | 10 | 25 |
| ^{⊙}Alpha Amylase, 20° Units, dry basis | 10 | 16.2 |
| Soluble Protein, % dry basis | 7.5 | 6.42 |
| Total Protein, % dry basis | 12.5 | 12.53 |
| Soluble/Total Protein Ratio,% dry basis | 60 | 51.2 |
| Color, °Lov. | 60 | 60 |

| | | |
|---|---|---|
| *Estimated | | |
| **⊙** Alpha amylase content was measured by the method described in "Methods of Analysis" published by the American Society of Brewing Chemists, 1976 | | |

### EXAMPLE 3

### Toasted Barley Protein Extract Preparation

To 20 liters of tap water at 42°C is added 8 g papain (crude concentrate, Fluka Chemical Co.), 4g potassium meta bisulfite, 4 Kg finely ground barley having a protein content of 14%. The temperature is maintained at 42°C for 4 hours with stirring and then cooled. The liquid is separated by centrifugation. The liquid contains 2.5-3.0% solids and 50% (dry basis) protein. The solids content could be increased to 7-10% by initially grinding to flour consistency, increasing the initial solids content, and/or employing a countercurrent extraction process. If chilling to 0°C overnight and decanting is substituted for centrifugation, about 50% of the liquid is recovered instead of the 67% recovered by centrifugation.

The liquid is spray-dried using a Niro spray drier with an inlet temperature of 205°C and a 95°C outlet temperature. Approximately 233 g of spray-dried protein extract is recovered with an additional 40-50 g remaining on the walls. The spray-dried extract is spread on a tray (layer about 3/4", 1.9 cm) and placed in a circulating air oven at 88°C to toast. The final product is a dark tan hygroscopic powder having a moisture content of about 3.5% and a protein content of 50% (dry basis).

### EXAMPLES 4-7

Malt (1200 g total) in the proportions reported in the Table below are ground to a standard brewers grind using a Miag Mill (Registered Trade Mark) to provide a product exhibiting a 75 wt.% retention on a No. 14 U.S. mesh screen. The ground malt is added to 3.6 liters of brewing water and mashed in at 38°C for 10 minutes with stirring. Stirring is stopped and the mash given a 60 minute protein rest at 38°C. Stirring is resumed and the mash is heated to a conversion temperature of 73°C and held for 20 minutes. The temperature is raised to 75°C and the mash is poured over into a lauter tub maintained at 75°C. Sparging is also at 75°C using 2.0 liters of brewing water as the sparge. The mash is allowed to settle for 15 minutes and then run off is begun. The wort is recycled until reasonably clear, then is run to the kettle. The collected wort is boiled for 1.5 hours. The hop charge is 45 g of Cascade pellets (ca 5.8 alpha acid) added 5 minutes into the boil and an additional 17g Cascade pellets plus 33 g Hallertau Huellerbitter added 1 hour into the boil. The wort is then cooled and aerated. The wort is pitched with 1 lb/bbl yeast (ATCC 32634-1) and fermented for seven days at 14°C. After 72 hours of fermentation, 25 g of the protein extract prepared in Example 3 above is added. The fermented wort is moved to a 3°C cold room to settle the yeast before filtration. After filtration, the beer can be freeze-dried, spray-dried or can be blended or formulated into various types of beer or dry beer flavored products.

**TABLE**

| Example No. | 4 | 5 | 6 | 7 |
|---|---|---|---|---|
| Grain Bill | | | | |
| Total g (as is) | 1200 | 1200 | 1200 | 1200 |
| % Type 1 Malt (as is) | 90 | 90 | 50 | 50 |
| % Type 2 Malt (as is) | 10 | 10 | 50 | 50 |
| Type 1 Malt g (dry basis) | 1021.7 | 1021.7 | 567.6 | 567.6 |
| Type 2 Malt g (dry basis) | 116.9 | 116.9 | 584.4 | 584.4 |
| Total g (dry basis) | 1138.6 | 1138.6 | 1152.0 | 1152.0 |
| Water for Mash-in, g | 3600 | 3600 | 3600 | 3600 |

| Wort before boil: | | | | |
|---|---|---|---|---|
| Total, g | 5456 | 5756 | 4830 | 4672 |
| Extract, % | 11.04 | 10.06 | 13.73 | 13.66 |
| Extract, g | 602.3 | 579.1 | 663.2 | 638.2 |
| Yield, % | 52.9 | 50.9 | 57.6 | 55.4 |
| Efficiency, % | 68.6 | 66.0 | 74.4 | 71.6 |
| Protein, % | 1.50 | 1.49 | 1.80 | 1.79 |

| Wort after boil: | | | | |
|---|---|---|---|---|
| Total, g. | 3466* | 4142** | 3350* | 3522** |
| Extract, % | 17.10 | 14.61 | 18.57 | 18.97 |
| Protein, % | 1.50 | 1.49 | 1.80 | 1.79 |

| Fermented Concentrate: | | | | |
|---|---|---|---|---|
| Specific gravity | 1.045051 | 1.03550 | 1.04067 | 1.04135 |
| Alcohol, % by wt. | 2.68 | 2.24 | 3.32 | 3.21 |
| Real Extract, % | 11.00 | 9.76 | 11.44 | 11.61 |
| Real Degree of Ferm.,% | 35.7 | 33.2 | 38.4 | 38.8 |
| Protein, % by wt. | 1.57 | 1.35 | 1.50 | 1.42 |
| Color, °SRM | 69.6 | 58.0 | 67.6 | 64.4 |
| pH | 4.76 | 4.78 | 4.67 | 4.77 |

| | | | | |
|---|---|---|---|---|
| * Unhopped brew | | | | |
| ** Hopped brew | | | | |

### Typical Formulation of Nonalcoholic Beer

The concentrate is diluted with deaerated tap water to bring alcohol concentration down to approximately 0.30% by volume using a dilution ratio of about 1:10 to 1:12. Fructose (0.3%) and 0.015% sodium chloride are added to improve mouthfeel.

Approximately 5.0% commercial beer or a standard brew is added as a blending agent. The beer is carbonated at 28 psi (193 kPa) and 3°C for 45 minutes, then bottled. The bottled beer is pasteurized (15 P.U.) prior to chilling to 3°C. The resulting beer has a color (SRM) of 3.0, bitterness units of 10, an alcohol content of about 0.5% by volume, less than 420 Joules per litre (40 calories per 12 ounces.) a protein content of 0.15 wt.% and a winey, estery flavor.

The concentrate or dry, intense beer-flavored powder can be added to cheese to impart an enhanced cheddar flavor imparting an aged cheese character, to yeast rolls to impart a fresh bread flavor and improve texture, to beer batter to impart a bread-like, grainy, toasted slightly hop bitter flavor and to smoked sausage to enhance a smoke flavor and impart a zesty, spicier flavor.

## Claims

1. An amylolytic enzyme-reduced dried malt which has a moisture content of 3.5 to 5.5 weight percent, a soluble protein content of 6.5 to 8 weight percent and a reduced alpha amylase content whereby on mashing the malt to produce a wort and fermenting the resultant wort, this malt contains sufficient nitrogen to promote fermentation but the low alpha amylase content limits the amount of fermentable sugar produced during mashing and hence the final alcohol content on fermenting said sugar.

2. A dried malt as claimed in claim 1 in which the alpha amylase content is substantially 10 (20° units) on a dry basis.

3. A dried malt as claimed in claim 1 or 2 in which the water content is about 4.5 weight percent.

4. A dried malt as claimed in any one of the preceding claims in which the protein content is about 7.5 weight percent.

5. An amylolytic enzyme-reduced dried malt which has a moisture content of 3.5 to 5.5 weight percent, a soluble protein content of 6.5 to 8 weight percent and a reduced alpha amylase content resulting from heating the green malt in an oven at an internal bed temperature of 70°C to 89°C for ½ to 6 hours.

6. A dried malt brewing composition which comprises a blend of 40 to 95 weight percent of a malt as claimed in any one of the preceding claims and 60 to 5 weight percent of a conventional brewer's malt having a normal alpha amylase content
